**Europäisches Patentamt**

**European Patent Office**

**Office européen des brevets**

(11) Veröffentlichungsnummer: **0 146 497**
**B1**

(12) **EUROPÄISCHE PATENTSCHRIFT**

(45) Veröffentlichungstag der Patentschrift:
25.01.89

(21) Anmeldenummer: **84810533.4**

(22) Anmeldetag: **05.11.84**

(51) Int. Cl.⁴: **B 01 D 23/02,** B 01 D 39/20

(54) Filter und Verfahren für die Filtration von geschmolzenem Metall.

(30) Priorität: **16.11.83 US 552262**

(43) Veröffentlichungstag der Anmeldung:
**26.06.85 Patentblatt 85/26**

(45) Bekanntmachung des Hinweises auf die Patenterteilung:
**25.01.89 Patentblatt 89/4**

(84) Benannte Vertragsstaaten:
**AT BE CH DE FR GB IT LI NL SE**

(56) Entgegenhaltungen:
**EP-A-0 064 474**
**DE-A-3 151 434**
**FR-A-2 077 063**
**FR-A-2 306 407**
**US-A-4 179 102**
**US-A-4 296 187**
**US-A-4 331 621**

(73) Patentinhaber: **SCHWEIZERISCHE ALUMINIUM AG, CH- 3965 Chippis (CH)**

(72) Erfinder: **Dore, James E., 1306 Valmont Drive, Hendersonville North Carolina 28739 (US)**
Erfinder: **Brockmeyer, Jerry W., 3032 Laurel Park Hwy., Hendersonville North Carolina 28739 (US)**

**Beschreibung**

Die Erfindung betrifft einen Filter in Form einer auswechselbaren Filterplatte mit an den seitlichen Randflächen angebrachter elastischer Dichtung für die Filtration von geschmolzenem Metall, passend in den Filtersitz einer Filterkammer, wobei die seitlichen Begrenzungen des Filtersitzes den Randflächen der Filterplatte angepasst sind und weiter ein Verfahren zum Filtrieren von geschmolzenem Metall mittels einer auswechselbaren Filterplatte mit an den seitlichen Randflächen angebrachter elastischer Dichtung, passend in den Filtersitz einer Filterkammer wobei die seitlichen Begrenzungen des Filtersitzes den Randflächen der Filterplatte angepasst sind.

Geschmolzene Metalle, insbesondere geschmolzenes Aluminium, enthalten in der Praxis üblicherweise mitgeschleppte Feststoffe, die beim Gussmetall-Endprodukt qualitätsmindernd wirken können. Diese Feststoffe treten nach Verfestigung des geschmolzenen Metalls als Einschlüsse auf und verursachen beim Endprodukt eine Minderung der Duktilität oder eine Verschlechterung der Glanz- und Eloxierungseigenschaften. Diese Einschlüsse können z. B. aus Oxidfilmen an der Metalloberfläche ausbrechen und in der Schmelze mitgeschleppt werden, sie können aus unlöslichen Verunreinigungen - wie Karbiden, Boriden und anderen Substanzen - oder aus abgebröckelten Ofen- und Wannenbaustoffen stammen.

Poröse keramische Schaummaterialien sind an sich bekannt als besonders geeignet zur Filtration von geschmolzenen Metallen, wie beschrieben in der US-PS-3 893 917 und auch in der US-PS-3 947 363, der US-PS-4 081 371 und der US-PS-4 024 056. Diese keramischen Schaummaterialien sind aus mehreren Gründen besonders zweckmässig für das Filtrieren von geschmolzenem Metall, so beispielsweise wegen deren ausgezeichneten Filtriereigenschaften und Rückhaltevermögen, niedrigen Kosten, leichten Anwendbarkeit und deren Einmalgebrauch auf Auswechselbasis. Dadurch, dass diese Keramikfilter leicht und kostengünsitg herstellbar sind und auf der Basis des Wegwerfens nach einmaligem Gebrauch benutzt werden, wurde von diesen bekannten Filtern vorliegender Art verlangt, dass sie sich leicht in die Filtriereinheit ein- und ausbauen lassen und dennoch eine hochwirksame Filtriereinheit darstellen.

Besonders dadurch, dass der Filter ein Gegenstand für den einmaligen Gebrauch darstellt, war es wichtig, eine sichere Abdichtung zwischen dem Filter und dessen Aufnahmevorrichtung in der Filterkammer vorzusehen und auch ein leichtes Ein- und Ausbauen und Reinigen zu ermöglichen. Der Filtersitz oder die Filterkammer selbst ist üblicherweise ein integrierter Teil eines Filtertroges, einer Giesspfanne, eines Tiegels etc. und ist aus den üblichen feuerfesten Materialien, die auch gegen schmelzflüssiges Metall beständig sind, konstruiert.

Es ist notwendig, die Filterplatte durch eine elastische Dichtung oder durch eine Filtermanschette, welche die Filterplatte an ihren seitlichen Randflächen umgibt, gegenüber dem Filtersitz abzudichten. Um diese Abdichtung der Filterplatte gegenüber dem Filtersitz zu erreichen, wird nach dem Stand der Technik auf die abgeschrägten seitlichen Randflächen an der Filterplatte das Dichtungsmaterial angebracht.

Bis anhin wurden keramische Schaumfilter mit einer Dichtung aus vorgeschnittenen Streifen, bestehend aus keramischen Fasern niedriger Dichte und einem organischen Binder versehen. Die gerade geschnittenen Streifen wurden einfach mit Klebeband an den abgeschrägten Kanten der Filter angeklebt, nachdem die Filter den Trockungs- und Hitzebehandlungsprozess durchlaufen hatten. Aus diesem genannten Prozess resultierten eine Anzahl von Nachteilen. Erstens, da die Dichtung bloss mit Klebeband am Filter befestigt wurde, war deren Passform schlecht und die Dichtung lose, was leicht zu Beschädigungen während der Handhabung der Filter führte, Zweitens, da die vorgeschnittenen Streifen gerade sind und die Ecken der Filter, die abgedichtet werden sollen, abgeschrägt sind, resultiert eine schlechte Passform, die dazu führen kann, dass geschmolzenes Metall zwischen Dichtung und Filterplatte durchdringt. Und schliesslich, da das Dichtungsmaterial erst nach dem Brennen auf den Filter geklebt wird, muss der Filter zusätzlich verstrichen werden, d.h. die Randflächen und insbesondere die Ecken mössen mit zusätzlichem Schlicker beschichtet werden, um sicher zu stellen, dass die Ecken während der Bearbeitungsprozesse nicht direkt berührt werden.

Die derart vorbereitete Filterplatte wird dann durch Anwendung von in der Regel mechanisch ausgeübtem Druck auf die Filterplatte senkrecht nach unten in die entsprechend angepassten abgeschrägten Randflächen des Filtersitzes in der Filterkammer abdichtend eingepasst. Es stellte sich heraus, dass als Resultat der auf die Filterplatte wirkenden Kräfte während des Einbaues in die Filterkammer Strukturschäden an der Filterplatte auftraten, die wiederum zu Metalldurchbrüchen und/oder ineffektiver Metallfiltration führten.

Die US-PS-4 331 621 beschreibt ein verbessertes Verfahren einer integrierend gebundenen Dichtung an den seitlichen Randflächen eines keramischen Filters, wie sie für die Filtration von geschmolzenem Metall gebraucht werden. Gemäss diesem Verfahren wird eine Form mit den Ausmassen des fertigen Filters, wie er in den Filtersitz für den Filter in der Filterkammer eingesetzt werden soll, vorbereitet. Ein mit wässrigem Schlicker imprägniertes Stück Schaummaterial wird mittig in die Form gesetzt, wobei seitlich zwischen dem imprägnierten Schaumstück und der Form rundum ein Spalt verbleibt. Dieser Spalt wird dann mit einem

3    EP 0 146 497 B1    4

Schlicker, enthaltend keramische Fasern, organische und/oder anorganische Binder und einen geeigneten Träger üblicherweise Wasser, aufgefüllt. Falls ein viskoser, nicht fliessender Schlicker angewendet wird, ist es dann möglich, vor dem Trocknen die Form zu entfernen. Wird aber ein dünnflüssiger Schlicker angewendet, ist es notwendig, eine poröse Form anzuwenden, welche bis nach dem Trocknen um das Formstück verbleibt. Das Formstück wird dann nach dem in den genannten US-Patentschriften 3 893 917, 3 947 363 und 4 081 371 beschriebenen Verfahren gebrannt. Weiter kann die Dichtung an einem getrockneten und gebrannten keramischen Formstück in gleicher Weise wie oben angebracht werden. In diesem Falle wird eine weitere Trocknungsoperation notwendig, um die Dichtung integrierend an den keramischen Körper zu binden. Auch wenn das Verfahren nach der US-PS-4 331 621 einige der oben genannten Nachteile des Aufklebens von vorgeschnittenen Streifen zu beheben vermag, ist es nach wie vor ein Problem, ein Lecken des Metalls um den Filter und/oder ein Aufschwimmen der Filterplatte mangels einer festen und sicheren Dichtung gegenüber der Filterkammer zu erzielen. Weiter bedürfen derartige Dichtungen mehrerer zusätzlicher Verfahrensstufen, was die Herstellung von Filterelementen der beschriebenen Art stark verteuert.

Aufgabe vorliegender Erfindung ist es, eine verbesserte Dichtung für die Filterplatten vorzuschlagen, die eine vereinfachte Gestaltung der Filterkammer und dessen Filtersitz für die Filterplatte ermöglicht und strukturelle Unregelmässigkeiten wie z. B. Absplitterungen oder Risse der Aufnahmevorrichtung und Filterkammer auszugleichen vermag.

Ferner liegt die Aufgabe vorliegender Erfindung in einem verbesserten Filtrieren von geschmolzenem Metall mit einem Filter, der ohne Anwendung starker Kräfte eine feste und sichere Abdichtung zwischen der Filterplatte und der Filterkammer ermöglicht.

Erfindungsgemäss wurden die Aufgaben durch die in den Ansprüchen 1 bis 5 gekennzeichneten Merkmale gelöst. Durch eine Wärmebehandlung, die ein Anquellen des quellbaren elastischen Dichtungsmaterials bewirkt, wurde eine feste und sichere Abdichtung der Filterplatte gegenüber der Filterkammer erreicht und ein Lecken des Metalls um die Filterplatte und oder ein Aufschwimmen der Filterplatte verhindert.

In Übereinstimmung mit vorliegender Erfindung wurde gefunden, dass es möglich ist, eine wirksame Abdichtung einer austauschbaren Filterplatte in der Filterkammer für die Filtration von schmelzflüssigem Metall zu erreichen, ohne eine aufwendig gestaltete Filterkammer zu benötigen.

Abb. 1 zeigt eine Draufsicht auf die Filterkammer nach vorliegender Erfindung mit der eingesetzten Filterplatte, die im wesentlichen horizontal angebracht ist.

Abb. 2 zeigt einen Schnitt entlang der Linie II-II von Abb. 1.

Abb. 3 zeigt einen Ausschnitt eines etwas vereinfachten Filterkammerquerschnitts unter Verwendung vorliegender Erfindung und

Abb. 4 zeigt einen Ausschnitt aus einer vertikal angebrachten Filterplatte unter Verwendung der erfindungsgemässen Merkmale.

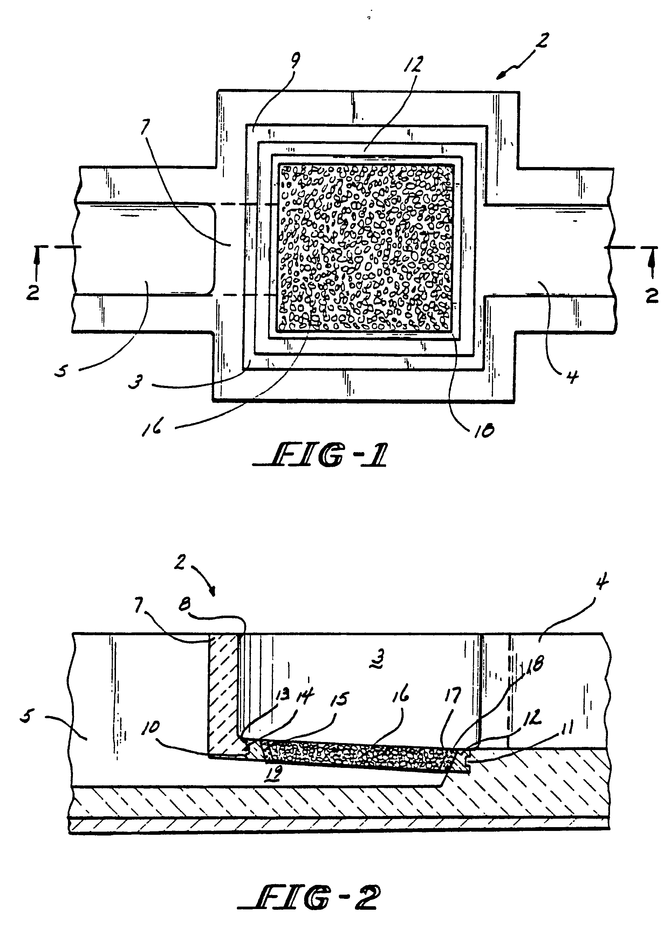

In Abb. 1 und 2 wird beispielhaft eine Filterkammer gezeigt, wie sie beispielsweise in Transfersystemen, Giesspfannen, Giessströgen, Transfertrögen, Metallbehandlungsanlagen und ähnlichem angewendet werden kann. Das Filtergerät 2 kann, falls gewünscht, in zwei Teilen konstruiert sein, die mit geeigneten Massnahmen, beispielsweise durch Nieten oder Schrauben oder auch durch nicht eingezeichnete Flansche an der Peripherie, miteinander verbunden sein können. Das beispielhaft dargestellte Filtergeräte in Abb. 1 und 2 ist ein Transfertrog, enthaltend eine Filterkammer 3, die durch einen Einlass 4 mit dem geschmolzenen Metall gespiesen wird und durch den Auslass 5 entleert wird. Das geschmolzene Metall kann auf alle möglichen Arten durch Einlass 4 eingespiesen werden, beispielsweise durch eine Giessrinne. Die Filterkammer 3 ist eine quadratisch gestaltete Kammer, deren Boden unter das Niveau des Einlasses 4 derart abgesenkt ist, dass das geschmolzene Metall, das in die Filterkammer 3 gelangt, durch die eingepasste erfindungsgemässe Filterplatte hindurchtreten und abfliessen kann. Die Filterkammer 3 kann durch einen an ihrem oberen Teil umlaufenden Rand 7 begrenzt sein.

In Abb. 1 wird eine Ausführungsform gezeigt, bei welcher der Rand 7 die Filterkammer auf allen Seiten, ausgenommen im Bereich des Einlasses 4 umschliesst. Der Rand 7 der Filterkammer setzt sich als Seitenwand 8 nach unten zum Filterkammerboden 9 fort. Der Filterkammerboden 9 ist begrenzt durch eine rundumlaufende Wandfläche 10, die ihrerseits mit einem den ganzen Umfang umgebenden Vorsprung 11 versehen ist, der seinerseits formschlüssig zur Wandfläche 13 und Einbuchtung 14 der konischen Aufnahmevorrichtung bzw. des Filtersitzes 12 mit deren abgeschrägten Flächen 15 passt. Die Aufnahmevorrichtung 12 ist an der Wandfläche 10 durch an sich bekannte Massnahmen befestigt. Die Filterplatte 16 hat eine entsprechend der abgeschrägten Fläche 15 abgeschrägte seitliche Randfläche 17, die formschlüssig in die abgeschrägte Fläche 15 der Aufnahmevorrichtung 12 passt. In Übereinstimmung mit vorliegender Erfindung sind die seitlichen Randflächen 17 des Filters mit einer quellbaren elastischen Dichtung 18 versehen, die ihrerseits gegenüber geschmolzenem Metall beständig ist. Die Filterplatte 16 mit der quellbaren elastischen Dichtung 18 ist derart in die Filterkammer 3 eingesetzt, dass die Filterplatten- und Dichtungskombinaton 16, 18 formschlüssig in den Filtersitz 12 der Filterkammer 3 passen.

Ein geeignetes quellbares elastisches Material für die Herstellung der Dichtung 18 wird durch die Firma Minnesota Mining and Manufacturing Company und unter dem Markennamen INTERAM hergestellt und verkauft. Das in Mattenform produzierte Material wird aus nicht expandiertem Vermiculit, Hydrobiotit oder wasserquellendem Tetrasiliciumdioxid-fluoro-Glimmer unter Verwendung von organischen und/oder anorganischen Bindern, um eine geeignete Nassfestigkeit zu erzielen, erhalten. Das mattenförmige Material kann in jeder gewünschten Dicke zwischen 0,1 und 25 mm durch Verfahren, die an sich aus der Papierherstellung bekannt sind und nachfolgend näher beschrieben werden, hergestellt werden. Geeignete anorganische Binder können Tetrasiliciumdioxid-fluoro-Glimmer umfassen, sowohl in der wasserquellenden ungetauschten Form oder nach einem Fällen als getauschtes Salz mit einem di-oder polyvalenten Kation, als auch als faseriges Material, wie Asbest. Organische Binder können kleine Anteile verschiedener Polymere und Elastomere, meistens in Latexfonm zugegeben, wie beispielsweise natürliche oder synthetische Gummilatices, umfassen.

Das mattenförmige Material kann durch an sich übliche Papierherstellungsmethoden hergestellt werden, beispielsweise beschrieben in der US-PS-3 458 329 in bezug auf keramisch umsetzbare Papiere. 30 bis 85 Gew.-% des quellbaren Materials, vorzugsweise nicht expandierte, geeignete Flocken aus Vermiculiterzen, Hydrobiotit oder wasserquellbarem synthetischem Tetrasiliciumdioxid-fluorid-Glimmer sind im mattenförmigen Material enthalten, entweder allein oder in Kombination untereinander. Verstärkende Materialien (von 0 bis 60 %, vorzugsweise von 5 bis 60 %) wie Chrysotil oder Amphibolasbest, weiche Glasfasern, wie sie unter dem Markennamen "Chopped E glass" (geschnittenes E Glas), feuerfeste Filamente wie Zirkon-Silicium-Fasern, wie beschrieben in der US-PS-3 709 706, kristalline Aluminiumoxid-Whiskers und Aluminosilicatfasern (erhältlich unter dem Handelsnamen Fiberfrax und Kaowool) oder Metallfasern können enthalten sein, um dem mattenförmigen Material Festigkeit, sowohl im "grünen" Stadium als auch im fertigen quellbaren mattenförmigen Material und in der geblähten Matte zu geben. Es werden 10 bis 70 Gew.-% eines anorganischen Binders angewendet, um das quellbare, mattenförmige Material herzustellen. Beispiele dafür sind wasserquellbare synthetische Glimmer Mikroflocken (US-PS-3 001 571), Asbest, Montmorillonit (Bentonit, Hectorit oder Saponit) oder Kaolinit (ball clay). Synthetischer Glimmer und Asbest, die auch wegen anderer Eigenschaften angewendet werden, besitzen die notwendige Fähigkeit, sich mit anderen vorhandenen Partikeln zu verbinden oder anzupassen, sodass sie auch in zweiter Linie als anorganische Binder wirken können.

Wird synthetischer Glimmer als Binder angewendet, so wird eine Lösung aus ungetauschtem synthetischem Tetrasiliciumdioxid-fluoro-Glimmer hergestellt, oder es kann auch eine Suspension von getauschten synthetischem Glimmer angewendet werden. Die Konzentrationen können über weite Bereiche variert werden, bis über 20 Gew.-% und mehr. Synthetische Tetrasilicafluorid-Glimmer können in der einen oder anderen der beiden Formen als Binder angewendet werden. Wird der ungetauschte Glimmer angewendet, (üblicherweise in Natrium- oder Lithiumform), so wird die Fällung durch Zugabe der Salze von di- oder trivalenten Kationen, wie beispielsweise die wässrigen Lösungen vom Bariumnitrat, Bariumchlorid, Aluminiumsulfat, Aluminiumnitrat eingeleitet. Wird der getauschte Glimmer angewendet (z. B. $Ba^{++}$, $K^+$, $Ca^{++}$, $Mg^{++}$, $Sr^{++}$, $Pb^{++}$, $Al^{+++}$, etc.) wird die beste Fällung durch nicht-ionische Polyelektrolyte wie Polyethylen-imine oder Polyacrylamid, wie das kommerziell erhältliche Seperan NP 10, erzielt. Kleine Mengen organischen oder anorganischen faserförmigen Materials können zur Verleihung zusätzlicher Grünfestigkeit zum "grünen" mattenförmigen Material zugegeben werden. Das quellbare Material, ein oder mehrere strukturverstärkende Substanzen und die Binder werden zusammen gemischt und anschliessend das Fällungsmittel beigefügt. Kleine Mengen Netzmittel oder Schäumungsmittel können ebenfalls im Rahmen der Erfindung angewendet werden, um die Dispergierung des quellbaren Materials zu verbessern. Um die Anwendung von Asbest für die Mattenherstellung zu vermeiden, dies im Hinblick auf eine mögliche Gesundheitsgefährdung mit diesem Material, können zur Substitution Glasfasern oder feuerfeste (glasige oder kristalline) Filamente oder Whiskers angewendet werden, ohne die Qualität der Matten zu beeinträchtigen. Im allgemeinen sind Asbestfasern weniger teuer als andere Fasern. Die Matte wird auf an sich bekannte Weise hergestellt durch übliche Techniken aus der Papierherstellung, beispielsweise in einer Handschöpfvorrichtung mit einem Fourdrinier-Sieb, aber auch durch andere Methoden wie sie weiter unten angegeben sind. Die resultierende "grüne" Matte wird bei rund 90° C getrocknet und man erhält ein handliches flexibles elastisches quellbares Material in Mattenform. Ein Streifen der trockenen Matte von 2,5 cm Breite und ungefähr 1,5 bis 2 mm Dicke vermag eine daran hängende Masse von 4,0 kg und mehr zu tragen. Die Elastizität des quellbaren Materials in Mattenform wird an quadratischen Mustern mit 25 mm Kantenlänge bestimmt, mittels einer modifizierten Methode nach ASTM F-36-66, in welcher die Prüfspitze durch einen Amboss mit 5,1 cm Kantenlänge ersetzt und die Hauptlast von 113 auf 12,5 kg reduziert wird. Es wird keine Feuchtigkeitskontrolle angewendet. Die erste Messung dient zur Kontrolle der Anzeige ohne Muster ($t_0$). Dann wird das Muster eingesetzt und um Oberflächenunregelmässigkeiten zu eliminieren, ein Druck von 2,26 kg für 5 sec. auf die Unterlage ausgeübt. Die Anzeige ($t_1$) wird festgehalten, nur mit dem Amboss-Messgerät und der Unterlage in Auslangslage (total 2,36 kg). Dann wird die Hauptlast, wie genannt, angewendet und nach 60 sec. die Anzeige ($t_2$) festgehalten, anschliessend wird die Last entfernt und die Anzeige ($t_3$) nach weiteren 60 sec. festgehalten.

$$\% \text{ Kompressibilität} = \frac{t_0 - t_2}{t_0 - t_1} \times 100$$

$$\% \text{ Rückformung} = \frac{t_3 - t_2}{t_1 - t_2} \times 100$$

Es wird bei der nichtexpandierten Matte eine Kompression von 10 - 35 % und eine Rückformung von 40 % beobachtet. Die quellbare Matte wird bei Temperaturen von 200 bis 600° C aufgequollen. Die expandierte Matte behält ihre Form und ein 2,5 cm breiter und 1,5 bis 2 mm dicker Streifen vermag eine daran hängende Masse von 2,5 kg zu tragen und behält seine Form bis zu 1200° C. Die thermische Expansion des quellbaren mattenförmigen Materials unter einer konstanten Last von 155 g/cm² führt zu einer Expansion der Dicke der Matte von 3 bis 100 % und mehr, abhängig von den inneren Bindekräften, der Erhitzungsrate und der Zusammensetzung. Allgemein gilt, je höher die Konzentration an quellbarem Material in der Matte oder je geringer die Last ist, desto grösser ist die Expansion. In Übereinstimmung mit der vorliegenden Erfindung, kann das quellbare Material entweder in Form einer Matte oder als Paste, abhängig von den Anwendungserfordernissen, angewendet werden. Die feuerfesten Fasern und der organische Binder kann den spezifischen Ansprüchen der Anmeldung angepasst werden, wie auch das in die Dichtung eingebrachte quellbare Material. Wenn mattenförmiges Material angewendet wird, kann dieses auf einfache Weise auf die Masse der seitlichen Randflächen der Filterplatte zugeschnitten werden, d.h. in der Regel in Streifen etwa in der Höhe der seitlichen Randflächen und in der Breite einer Seitenkante oder gleich des ganzen Umfangs der Filterplatte, um dann auf an sich bekannte Weise rundum an die seitlichen Wandflächen der Filterplatte geklebt zu werden. Das Ankleben der streifenförmig geschnittenen Dichtung kann mit Klebeband oder organischen flüssigen oder pastösen Klebern erfolgen. Eine Befestigung mit einem anorganischen Binder, wie beispielsweise einem Zement wäre möglich. Um Massungenauigkeiten und die wärmebedingten Ausdehnungen des Dichtungsmaterials auszugleichen, kann die quellbare elastische Dichtung im Bereich der seitlichen Randflächen des Filters pro Randfläche wenigstens einmal treppenförmig durchgeschnitten sein, wobei die in Fliessrichtung des Metalls horizontalen Schnittstellen bündig aneinander stossen und die vertikalen Schnittstellen als Dilatationsfugen einen Abstand von 0,5 bis 10 mm aufweisen. In der Regel genügt eine Schnittstelle, die treppenartig eine horizontale Stufe und je eine nach unten und eine nach oben gerichtete vertikale Stufe ausbildet.

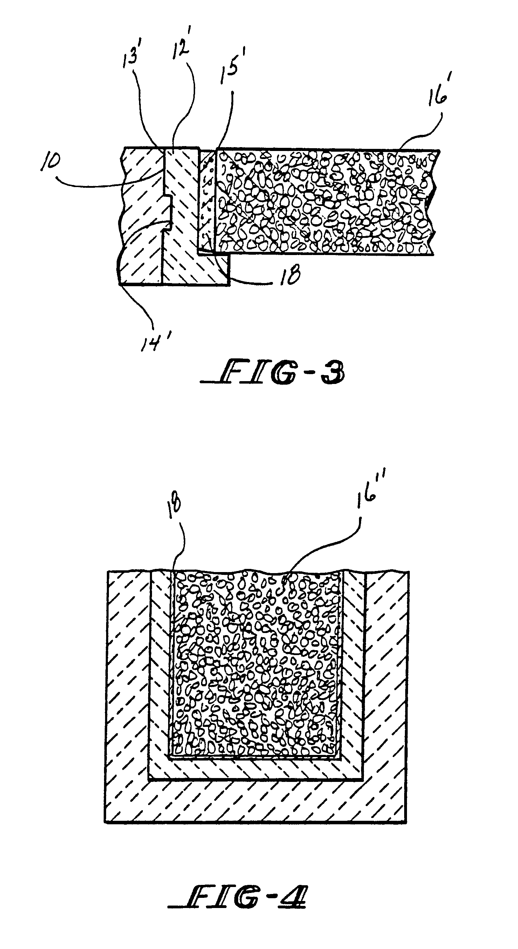

Wie in Abb. 1 und 2 gezeigt ist der Filter im wesentlichen horizontal im Trog angeordnet. Oie Filterplatte 16 ist vertieft im Bodenteil 9 der Filterkammer 3 angeordnet. Geschmolzenes Metall wird durch Einlass 4 in die Filterkammer 3 und durch die Filterplatte 16 geleitet. Das geschmolzene Metall fliesst abwärts durch die Filterplatte 16 in die Vertiefung 19 unter der Filterplatte 16. Die Filterplatte 16 wird durch die quellbare Dichtung 18 abdichtend festgehalten, wobei die Dichtung 18 zweckmässig aufgrund der vom geschmolzenen Metall abgegebenen Wärme aufquillt und dabei eine feste und sichere Abdichtung der Filterplatte 16 in der Filterkammer 3 erzielt und somit ein Metalldurchtritt aussen um die Filterplatte herum und/oder ein Aufschwimmen der Filterplatte vermieden wird. Eine feste und sichere Abdichtung kann auch durch Vorheizen der Dichtung 18 vor dem Metalldurchfluss durch die Filterplatte erreicht werden. Das ermöglicht etwas mehr Flexibilität der Gestaltung des Filtrationssystems. Es liegt im Rahmen vorliegender Erfindung, die beiden Wärmebehandlungen der Dichtung 18 zu kombinieren, in der Regel in dem Sinne, dass die Filterplatte 16 mit der Dichtung 18 erst vorgeheizt wird und eine endgültige Quellung durch die Wärme des geschmolzenen Metalls erreicht wird. Wie oben erwähnt, neigt die Dichtung 18 zu einer Selbstdichtung. Sobald ein Lecken des Metalls auftritt, wird die umliegende Dichtung 18 aufgeheizt, quillt an und schliesst das Leck. Auch bei Ausbröchen oder anderen Unregelmässigkeiten am Filtersitz 12, schwillt die Dichtung 18 auf und füllt die Öffnungen, wobei Lecke geschlossen werden. Zusätzlich zum vorgenannten, in Übereinstimmung mit Abb. 3, ermöglicht die Quellfähigkeit der Dichtung 18 eine einfachere Filterkammergestaltung. Wie oben erwähnt, ist die Dichtung 18 selbstdichtend, was die Anwendung eines Filtersitzes 12 in einfacher quadratischer Sitzform 15' anstatt einer konisch zulaufenden Sitzform 12 ermöglicht. Entsprechend muss die seitliche Randfläche der Filterplatte 16' nicht konisch zulaufen, was sich in niedrigeren Produktionskosten niederschlägt.

**Patentansprüche**

1. Filter in Form einer auswechselbaren Filterplatte (16) mit an den seitlichen Randflächen (17) angebrachter elastischer Dichtung (18) für die Filtration von geschmolzenem Metall, passend in den Filtersitz (12) einer Filterkammer (3), wobei die seitlichen Begrenzungen (15) des Filtersitzes (12) den Randflächen (17) der Filterplatte (16) angepasst sind, dadurch gekennzeichnet, dass die Dichtung (18) durch Wärmeeinfluss quellbar ist.

2. Filter nach Patentanspruch 1, dadurch gekennzeichnet, dass die Dichtung (18) durch den Wärmeeinfluss des geschmolzenen Metalls und/oder durch Vorheizen der Filterplatte (16) in den Filtersitz (12) quellbar ist.

3. Filter nach Patentansprüchen 1 und 2, dadurch gekennzeichnet, dass das Material, aus der die Dichtung (18) besteht, nicht expandiertes Vermiculit, Hydrobiotit oder wasserquellendes Tetrasiliciumdioxid-fluoro-Glimmer und organische und/oder anorganische Binder enthält.

4. Filter nach Patentansprüchen 1 bis 3, dadurch gekennzeichnet, dass die Dichtung (18) im Bereich der Randflächen (17) des Filters pro Randfläche (17) wenigstens einmal treppenförmig durchgeschnitten ist, wobei die in Fliessrichtung des Metalls horizontalen Schnittstellen bündig aneinander stossen und die vertikalen Schnittstellen als Dilatationsfugen einen Abstand von 0,5 bis 10 mm aufweisen.

5. Verfahren zum Filtrieren von geschmolzenem Metall mittels einer auswechselbaren Filterplatte (16) mit an den seitlichen Randflächen (17) angebrachter elastischer Dichtung (18), passend in den Filtersitz (12) einer Filterkammer (3), wobei die seitlichen Begrenzungen des Filtersitzes (12) den Randflächen (17) der Filterplatte (16) angepasst sind, dadurch gekennzeichnet, dass eine mit einer durch Wärmeeinfluss quellbare Dichtung (18) ausgestattete Filterplatte (16) verwendet wird, diese Filterplatte (16) in den Filtersitz (12) der Filterkammer (3) eingesetzt wird, durch eine Wärmebehandlung ein Anquellen der Dichtung (18) bewirkt wird und das geschmolzene Metall durch die Filterplatte (16) geführt wird, wobei gegebenenfalls das geschmolzene Metall die Wärmebehandlung allein herbeiführt.

## Revendications

1. Filtre sous la forme d'une plaque filtrante (16) interchangeable, avec un joint élastique (18) appliqué sur les chants (17) pour la filtration de métaux fondus, s'adaptant dans le siège de filtre (12) d'une chambre de filtration (3), où les limites latérales (15) du siège de filtre (12) sont adaptées aux chants (17) de la plaque filtrante (16), caratérisé en ce que le joint (18) est expansible sous l'effet de la chaleur.

2. Filtre selon la revendication 1, caractérisé en ce que le joint (18) peut se dilater sous l'effet de la chaleur du métal fondu et/ou par un réchauffage préalable de la plaque filtrante (16) dans le siège de filtre (12).

3. Filtre selon les revendications 1 et 2, caractérisé en ce que le matériau dont se compose le joint (18) contient de la vermiculite non expansée, de l'hydrobiotite ou du mica fluorotétrasilicique gonflant à l'eau et des liants organiques et/ou anorganiques.

4. Filtre selon les revendications 1 à 3, caractérisé en ce que le joint (18), au niveau des chants (17) du filtre, est coupé au moins une fois par chant en forme d'escalier, les bords horizontaux se trouvant dans le sens de l'écoulement du métal étant jointifs et les bords verticaux utilisés comme joints de dilatation étant écartés de 0,5 à 10 mm.

5. Procédé de filtration des métaux fondus au moyen d'une plaque filtrante (16) interchangeable, avec un joint élastique (18) appliqué sur les chants (17), s'adaptant dans le siège de filtre (12) d'une chambre de filtration (3), où les limites latérales (15) du siège de filtre (12) sont adaptées aux chants (17) de la plaque filtrante (16), caractérisé en ce que l'on utilise une plaque filtrante (16) équipée d'un joint (18) expansible sous l'effet de la chaleur, que cette plaque filtrante (16) est placée dans le siège de filtre (12) de la chambre de filtration (3) qu'un traitement thermique provoque une expansion du joint (18) et en ce que le métal fondu est guidé vers la plaque filtrante (16) le métal fondu pouvant éventuellement provoquer à lui seul le traitement thermique.

## Claims

1. Filter for the filtration of molten metal, in the form of an exchangeable filter plate (16) with an elastic seal (18) fixed to the lateral edge faces (17), fitting into the filter seat (12) of a filter chamber (3), the lateral boundaries (15) of the filter seat (12) being adapted to the edge faces (17) of the filter plate (16), characterized in that the seal (18) is swellable by the action of heat.

2. Filter according to Patent Claim 1, characterized in that the seal (18) is swellable into the filter seat (12) by the action of the heat of the molten metal and/or by preheating of the filter plate (16).

3. Filter according to Patent Claims 1 and 2, characterized in that the material, of which the seal (18) consists, contains unexpanded vermiculite, hydrobiotite or waterswelling tetrasilicon dioxide fluoride mica and organic and/or inorganic binders.

4. Filter according to Patent Claims 1 to 3, characterized in that, in the region of the edge faces (17) of the filter, the seal (18) is cut through stepwise at least once per edge face (17), with the cut locations, which are horizontal in the direction of flow of the metal, being in flush abutment and the vertical cut locations, as expansion joints, being at a spacing of 0.5 to 10 mm.

5. Process for the filtration of molten metal by means of an exchangeable filter plate (16) with an elastic seal (18) fixed to the lateral edge faces (17), fitting into the filter seat (12) of a filter chamber (3), the lateral boundaries of the filter seat (12) being adapted to the edge faces (17) of the filter plate (16), characterized in that a filter plate (16) provided with a seal (18) swellable by the action of heat is used, this filter plate (16) is inserted into the filter seat (12) of the filter chamber (3), incipient swelling of the seal (18) is effected by a heat treatment and the molten metal is passed through the filter plate (16), it being possible for the heat treatment to be effected by the molten metal alone.

*FIG-1*

*FIG-2*

_FIG-3_

_FIG-4_